# EUROPÄISCHE PATENTSCHRIFT

(11) **EP 1 356 221 B1**
(45) Veröffentlichungstag und Bekanntmachung des Hinweises auf die Patenterteilung: **12.04.2006**
(21) Anmeldenummer: 02703543.5
(22) Anmeldetag: 11.01.2002
(51) Int. Cl.: F16J 15/34

(54) **RINGFÖRMIGE DICHTUNG**
RING-SHAPED SEAL
JOINT ANNULAIRE

(30) Priorität: 19.01.2001 DE 10102161
(43) Veröffentlichungstag der Anmeldung: 29.10.2003
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/000206
(87) Internationale Veröffentlichungsnummer: WO 2002/057668

(56) Entgegenhaltungen:
- EP-A- 0 505 352
- DE-A- 3 326 053
- DE-C- 3 739 179
- GB-A- 2 070 157
- US-A- 3 394 941
- US-A- 3 630 532
- US-A- 4 039 198
- US-A- 4 201 392
- US-A- 4 848 777

## Beschreibung

Die vorliegende Erfindung betrifft eine Dichtung, angeordnet zwischen einer radial nach innen weisenden äußeren Begrenzungsfläche eines ringförmigen Dichtungsspaltes und einer radial nach außen weisenden inneren Begrenzungsfläche des Dichtungsspaltes.

Dichtungen zum Abdichten von ringförmigen Spalten werden in der Technik insbesondere im Maschinenbau in den unterschiedlichsten geometrischen und Verwendungs-Formen benötigt. Im Stand der Technik sind folglich verschiedenste Bauformen solcher Dichtungen - auch als vorbereitete Standardbauteile, sogar genormt - bekannt. Eine der einfachsten Formen bekannter ringförmiger Dichtungen ist der O-Ring aus Gummi. Wesentlich komplizierter im Aufbau ist zum Beispiel der sogenannte Wellendichtring, ein Dichtungselement mit einem Metallring als äußerem Sitz und einer radial nach innen weisenden Dichtungslippe aus Gummi. Derartige Wellensicherungsringe dienen zum Beispiel der Dichtung eines Getriebegehäuses, aus dem eine sich drehende Welle herausgeführt ist. Dazu sitzt der Metallring in der Bohrung des Gehäuses, durch das die Welle geführt ist, und die Dich-tungslippe liegt gegen eine möglichst glattwandige kreiszylindrische Mantelfläche der Welle an. Die Kontaktfläche zwischen der Dichtungslippe und der Wellenoberfläche ist reduziert auf eine Ringlinie um die Welle - und zwar dadurch, dass sich die Dichtlippe radial nach innen zu einer geometrisch scharfen Kante verjüngt. Diese Ausgestaltung gestattet hohe Drehzahlen der Welle, wobei zum Beispiel Getriebeöl, das sich im Inneren des Gehäuses befindet und das vom Austritt aus dem Gehäuse durch die Dichtung gehindert werden soll, einen Schmierfilm unter der Dichtlippe bildet. Dynamische Druckverhältnisse im Bereich der Kontaktfläche sorgen dann bekannterweise dafür, dass das Öl nicht unter der Dichtlippe hindurch nach außen dringt. Weiterhin sind zur Dichtung ringförmiger Spalten um ein sich nicht nur drehendes, sondern auch translatorisch durch die Bohrung bewegtes Bauteil insbesondere Filzringe bekannt.

In jedem Fall sind Dichtungen zum Beispiel durch Verschmutzung oder Druck - als Dichtungen gegen ein bewegtes Bauteil aber insbesondere auch durch Abrieb und Ermüdung - Verschleiß und möglicher Zerstörung ausgesetzt, die in aller Regel auch zur Abtragung des Dichtungselementes im Bereich der Kontaktfläche und damit zum einen zum Nachlassen einer Vorspannkraft, mit der die Dichtung gegen ein komplementäres Bauteil anliegt, und zum anderen sogar zum Klaffen und Öffnen der Dichtung führen können. Somit begrenzt der Verschleiß der Dichtung ihre Standzeit und macht bei längerer Lebensdauer der Vorrichtung; deren Element die Dichtung ist, einen Austausch der Dichtung erforderlich.

Aus der DE-OS 2 144 681 ist eine zusammengesetzte Dichtung für Kolbenstangen und dergleichen bekannt. Diese weist einen ersten ringförmigen Teil und einen zweiten ringförmigen Teil auf, die in axialer Richtung aneinanderstoßend und rund um die Außenseite eines hin und her beweglichen Teils fest angeordnet sind, wobei der erste bzw. der zweite ringförmige Teil Abschnltte aufweisen, die mit dem hin und her beweglichen Teil in Dichtungseingriff stehen. Der zweite ringförmige Teil, der Hochdruckteil, wird durch den ersten ringförmigen Teil belastet, um den Lagerdruck des Hochdruckteils bzw. dessen Lippe gegen das hin und her bewegliche Teil zu erhöhen.

Aus der US 4,201,392 ist eine aus drei Teilen aufgebaute Dichtung bekannt

Demgegenüber liegt der Erfindung die Aufgabe zugrunde, eine Dichtung zu schaffen, deren Standzeit verlängert ist.

Diese Aufgabe wird erfindungsgemäß durch eine Dichtung mit den Merkmalen des Anspruches 1 gelöst. Bevorzugte Ausgestaltungen der Erfindung sind in den Unteransprüchen angegeben.

Erfindungsgemäß weist eine Dichtung zum Dichten eines ringförmigen Dichtungsspaltes einen Dichtungsring, ein Vorspannmittel und einen Druckring auf. Der Dichtungsring hat eine Dichtungsfläche, die gegen eine Begrenzungsfläche des Dichtungsspaites dicht anliegt. Dies kann erfindungsgemäß die radial nach innen weisende äußere Begrenzungsfläche oder die radial nach außen weisende innere Begrenzungsfläche des Dichtungsspaltes sein. Mit der anderen (also inneren oder äußeren) Begrenzungsfläche des Dichtungsspaltes bildet eine Druckfläche des Dichtungsringes auf dessen der Dichtungsfläche radial gegenüberliegenden Seite einen im Querschnitt keilförmigen Zwischenraum. Dort hinein ist durch das Vorspannmittel der Druckring vorgespannt, und zwar gegen die den keilförmigen Zwischenraum bildenden Flächen in den keilförmig sich verjüngenden Zwischenraum hinein, so dass der Druckring den Zwischenraum auseinander drückt und so den Dichtungsring mit seiner Dichtungsfläche dicht gegen die (äußere oder innere) Begrenzungsfläche des Dichtungsspaltes andrückt.

Dabei kann der Druckring zum Beispiel einfach einen kreis- oder rechteckförmigen Querschnitt oder Querschnittanteil aufweisen und kann zum Beispiel einfach von einem Federring als Vorspannmittel in den keilförmigen Zwischenraum gedrückt sein, bevorzugt ist aber ein Druckring mit einem im wesentlichen dreieckigen Querschnitt - insbesondere gebildet aus einer äußeren Wirkfläche in Gestalt einer radial nach außen gerichteten Kreiszylindermantelfläche und mit einer inneren Wirkfläche in Gestalt einer radial nach innen gerichteten Kreiskegelmantelfläche und mit einer Vorspannfläche in Gestalt einer axial gerichteten Ringfläche, gegen die das Vorspannmittel vorgespannt ist. Das Vorspannmittel ist vorzugsweise ein Fluid, das auf einer Seite der Dichtung unter Druck steht und durch Leitungsverbindung - zum Beispiel einfach in Gestalt von spaltförmigen Zwischenräumen, die bis zu der erfindungsgemäßen Dichtungsvorrichtung und ihrem Bauraum nicht weiter abgedichtet sind - gegen das Vorspannmittel anliegt. Damit die als axial gerichtete Ringfläche ausgestaltete Vorspannfläche den Druck des Fluides dann sicher aufnimmt und auf die Wirkflächen des Druckringes übertragen kann, ist die Vorspannfläche vorzugsweise konkav ausgebildet. Sie kann dann auch bei einer komplementär gerichteten axialen, ebenen Ringfläche eines Sitzes, in dem die erfindungsgemäße Dichtung montiert ist, mit dieser eine ringförmige Druckkammer umgrenzen (also mit einem Querschnitt, der einerseits entsprechend der konkaven bogenförmig und andererseits entsprechend der ebenen Fläche gerade begrenzt ist).

Bevorzugt und im zuvor genannten Beispiel entsprechend der radial nach innen gerichteten Kreiskegelmantelfläche als innerer Wirkfläche des Druckringes weist der Dichtungsring als Druckfläche, gegen die die innere Wirkfläche des Druckringes anliegt, eine dazu komplementäre, also radial nach außen gerichtete Kreiskegelmantelfläche auf - wobei die Dichtungsfläche dann dementsprechend auf der radial gegenüberliegenden Seite des Dichtungsringes also radial nach innen weisend ausgebildet ist.

Vorzugsweise weist die erfindungsgemäße Dichtungsfläche zwei radial vorspringende Dichtungslippen auf, die sich zum Beispiel wulstartig über den Umfang der Dichtungsfläche je nach deren Orientierung also entweder radial nach innen oder radial nach außen erstrecken. Zwischen sich grenzen die zwei Dichtungslippen vorzugsweise eine Nut in dem Dichtungsring ein, so dass der Querschnitt durch die Dichtungslippen und die Nut vorzugsweise durch eine stetige Wellenlinie begrenzt ist, wobei der Querschnitt durch die Dichtungslippen und die Nut jeweils kreisbogenförmig (die Lippen konvex und die Nut konkav) sein kann.

Die erfindungsgemäße Dichtung ist besonders vorteilhaft einsetzbar zur Dichtung eines ringförmigen Spaltes zwischen einem äußeren Bauteil mit einer Bohrung und einem inneren Bauteil, das sich oszillierend durch diese Bohrung bewegt. Insbesondere für diese Einsatzsituation weist die Dichtungsfläche des Dichtungsringes radial nach innen und liegt gegen die vorzugsweise kreiszylindrische Mantelfläche des inneren Bauteiles an, die vorteilhafterweise möglichst glattwandig ausgebildet ist. Dieser Anwendungsfall liegt zum Beispiel bei einem Kolben vor, dessen Kolbenstange als inneres Bauteil durch das Kolbengehäuse als äußeres Bauteil nach außen geführt ist. Hier muss der Ringspalt dazwischen gewöhnlich gegen ein Fluid, das sich als Druckmedium in dem Kolben befindet, gedichtet werden. Erfindungsgemäß kann nun dieses Fluid, das bei oszillierender Bewegung des Kolbens mit jedem Kolbenhub zeitweise - nämlich pulsartig - unter Druck steht, als Vorspannmittel durch Spaltzwischenräume zum Sitz des Druckringes vordringen und dort (vorzugsweise über die Vorspannfläche) den Druckring in den keilförmigen Zwischenraum zwischen dem Dichtungsring und der anderen der Flächen des Dichtungsspaltes - die in diesem Anwendungsfall die radial nach innen weisende äußere Fläche des Dichtungsspaltes in dem äußeren Bauteil ist - hineindrücken.

Wenn nun zum Beispiel durch den oszillierenden Kolbenhub oder aufgrund anderer verschleißender Einflüsse auf die Dichtungsfläche des Dichtungsringes ein Abrieb stattfindet, bewirkt die erfindungsgemäße Dichtung vorteilhaft, dass durch die Vorspannung des Druckringes dieser Abrieb dadurch ausgeglichen wird, dass der Dichtungsring durch die Druckkraft des Druckringes sozusagen "nachgestellt" wird, also von der durch den Druckring aufgebrachten Vorspannung des Vorspannungsmittels (im zuletzt beschriebenen Beispiel dem Fluid) gegen die komplementäre Dichtspaltfläche gedrückt wird.

Vorteilhaft in dem Anwendungsfall des oszillierenden Bauteiles ist bei Ausbildung der beiden Lichtlippen mit der dazwischenliegenden Nut weiterhin, dass mit jedem Kolbenhub eine Portion des Fluids, welches das innere Bauteil benetzt, in die Nut zwischen den Dichtungslippen transportiert wird und dort eine Art Reservoir zur Schmierung der Dichtungsfläche bildet. Dies wirkt sich insbesondere dann vorteilhaft aus, wenn das Fluid selbst gewisse Schmierstoffeigenschaften aufweist. Es hat diese vorteilhafte Schmierwirkung aber zum Beispiel auch dann, wenn es in Kontakt mit dem Werkstoff der Dichtungsfläche zum Beispiel dessen Gleiteigenschaften mit dem Oberflächenwerkstoff des inneren Bauteiles (oder allgemeiner mit dem komplementären Bauteil, gegen den es anliegt) oder auch dessen Verschleißresistenz zum Beispiel durch chemische Reaktion oder Bildung eines Schutzfilmes begünstigt.

Nachdem also in dieser Ausführungsform mit jeder Translationsbewegung des inneren Bauteiles aus dem Fluid heraus das Fluid als Schmierstoff zur Dichtungsfläche transportiert wird, kann diese vorteilhafte Wirkung erfindungsgemäß zusätzlich dadurch begünstigt werden, dass sich auf der anderen Seite der Dichtung in der Wandlung der Bohrung des äußeren Bauteiles zusätzlich eine Fluidspeichemut befindet, die dort zum Beispiel als Ringnut auf dem gesamten Umfang ausgebildet ist. In ihr kann sich Fluid, das sich auf der benetzten Oberfläche des inneren Bauteiles möglicherweise unter der Dichtung noch weiter hindurchbewegt, bevor die Dichtung unter der Vorspannung des Fluids vollständig abdichtet, sammeln, was zunächst zusätzlich die Dichtungswirkung begünstigt, indem diese Portion des Fluides nicht weiter nach außen transportiert wird. Außerdem transportiert die Rückhubbewegung des inneren Bauteiles Fluid aus dieser Fluidspeichemut zurück zu der Dichtungsfläche, wo das Fluid dieselben begünstigenden (z.B. schmierenden) Wirkungen zeitigen kann, die oben schon für die Hubbewegung beschrieben sind.

Es kann vorkommen, dass der Abrieb an der Dichtung im Betrieb unerwartet hoch ist. Dies kann im Wesentlichen auf die starke Verformung der Dichtung im Betrieb zurückgeführt werden. Um dem entgegenzuwirken, ist in einer weiteren Ausgestaltung vorgesehen, dass die Dichtung einen formstabilen Kern aufweist. Dieser formstabile Kern kann z. B. aus Polyäthylen (PE), Polypropylen (PP) oder Polyoxymethylen (POM) hergestellt werden. Insbesondere POM ist ein im Sanitärbereich weit verbreitetes Material, weil es leicht zu verarbeiten ist und hydrophobe Eigenschaften aufweist.

Der Dichtungsring kann dabei in seiner äußeren Form unverändert bleiben. Der formstabile Kern des Dichtungsringes kann im Wesentlichen der Form des Druckringes entsprechen, also keilförmig ausgebildet sein, und von dem Dichtungsmaterial derart umschlossen sein, dass die äußere Form der Dichtung unverändert bleibt. Altemativ kann der formstabile Kern auch im Wesentlichen die Form des Dichtungsrings aufweisen und rundum wiederum mit dem Dichtungsmaterial beschichtet sein. Die Materialstärke des Dichtungsmaterials liegt dann bevorzugt etwa im Bereich von 2 bis 3 mm.

Die erfindungsgemäße Dichtung lässt sich in beschriebener Weise erfindungsgemäß besonders vorteilhaft einsetzen bei Transportkolben in Meerwasserentsalzungsanlagen, bei denen Transportkolben Meerwasser mit verhältnismäßig geringen Kolbenhubfrequenzen von ungefähr 0,1 Hz fördern. Aber auch bei anderen Kolben oder Pumpen lässt sich die erfindungsgemäße Dichtung vorteilhaft einsetzen.

Die vorliegende Erfindung wird im folgenden mit Bezug auf die beigefügten Zeichnungen beschrieben, wobei
- Figur 1 und 2: geschnittene Seitenansichten erfindungsgemäßer Dichtungen an ringförmigen Dichtungsspalten jeweils zwischen einem äußeren und einem inneren Bauteil und
- Figur 3 und 4: zwei Ausgestaltungen einer erfindungsgemäßen Dichtung mit einem formstabilen Kern zeigen.

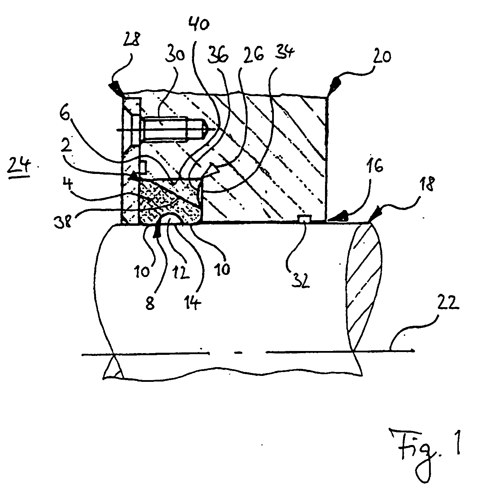

In Figur 1 ist eine Dichtung 2 erkennbar, die einen Dichtungsring 4 und einen Druckring 6 aufweist. Der Dichtungsring 4 hat eine radial nach innen weisende Dichtungsfläche 8 mit einem Querschnitt in Gestalt einer stetigen Wellenlinie. Die Wellenlinie als Querschnitt kommt zustande durch zwei radial nach innen vorspringende Dichtungslippen 10, die zwischen sich eine Nut 12 in der Dichtungsfläche 8 des Dichtungsringes 4 umgrenzen. Die Dichtungsfläche 8 des Dichtungsringes 4 liegt gegen eine radial nach außen weisende innere Begrenzungsfläche 14 eines Dichtungsspaltes 16 an, der zwischen einem inneren Bauteil 18 und einem äußeren Bauteil 20 gebildet ist. Das innere Bauteil 18 ist eine Kolbenstange, die sich in einer Bohrung 16 in einem Kolbengehäuse als äußerem Bauteil 20 oszillierend in Richtung der Achse 22 bewegt. Auf der in der Figur linken Seite 24 befindet sich in dem Kolbengehäuse Salzwasser 24, was von einer Anlage (nicht dargestellt), von der das Kolbengehäuse 20 und die Kolbenstange 18 Elemente sind, unter Druck gesetzt und dadurch transportiert wird. Die Dichtung 2, die in einem ringnutförmigen Sitz 26 in dem äußeren Bauteil 20 sitzt, wird von einem Metallring 28 mittels einer Schraube 30 axial in dem Sitz 26 gehalten.

Mit jedem Hub der Kolbenstange 18 wird Wasser, das die Oberfläche der Kolbenstange 18 benetzt, in den Bereich der Dichtungslippen 10 und der Nut 12 zwischen den Dichtungslippen 10 transportiert, bildet dort einen Schmierfilm und sammelt sich in der Nut 12.

Durch die oszillierende Bewegung der Kolbenstange 18 findet an den Dichtungslippen 10 Abrieb statt, so dass nach gewisser Betriebszeit die Dichtungswirkung der Dichtung 2 nachlässt und immer etwas mehr Wasser 24 mit jedem Hub der Kolbenstange 18 nach außen transportiert wird. Wasser 24, welches die Oberfläche der Kolbenstange 18 benetzt und ganz unter der Dichtungsfläche 8 nach außen (in Figur 1 nach rechts) transportiert wird, sammelt sich dort in einer Fluidspeichemut 32, die ringförmig in der radial nach innen weisenden Wandung der Bohrung 16 in dem äußeren Bauteil 20 ausgebildet ist. Die Wandung liegt dabei an der Kreiszylindermantelfläche, die glattwandig die Oberfläche der Kolbenstange 18 bildet, mit Spielpassung an. So kann sich das Wasser 24, das als Benetzung der Kolbenstange 18 unter der Dichtung 2 hindurch nach außen transportiert ist, dort sammeln und wird von dort auch auf dem Rückweg der Kolbenstange 18 wieder in den Bereich der Dichtung 2 transportiert und begünstigt dadurch die Schmierfilmbildung in dem Bereich zwischen der Dichtung 2 und den Begrenzungsflächen des Dichtungsspaltes (16) zusätzlich.

Mit stärker werdendem Abrieb der Dichtungslippen 10, insbesondere aufgrund der oszillierenden Bewegung der Kolbenstange 18, dringt immer mehr Wasser 24 nach außen und dringt dabei auch hinter der Dichtung 2 (in Figur 1 rechts) in den Sitz 26 ein. Zwischen der axial (nach links) gerichteten Begrenzungsfläche 34 des Sitzes 26 und einer konkaven, axial (nach rechts) gerichteten Vorspannfläche 36 des Druckringes 6 baut sich dann der Druck auf, mit dem das Wasser 24 nach außen dringt, und spannt so den Druckring 6 axial (nach links) in einen Zwischenraum vor, der mit keilförmigem Querschnitt zwischen einer radial nach außen gerichteten Druckfläche 38 des Dichtungsringes 4 und einer radial nach innen weisenden äußeren Begrenzungsfläche 40 des Dichtungsspaltes 16 gebildet ist. Die radial nach innen weisende äußere Begrenzungsfläche 40 des Dichtungsspaltes 16 ist dabei die radial gerichtete Begrenzungsfläche des Sitzes 26, und sie ist kreiszylindermantelförmig; und die radial nach außen gerichtete Druckfläche des Dichtungsringes 4 ist zum Bilden des keilförmigen Querschnittes des Zwischenraumes kreiskegelmantelförmig.

Aufgrund dieser Anordnung und Ausgestaltung drückt nun das nach außen gedrungene Wasser 24 als Vorspannmittel gegen die Vorspannfläche 36 des Druckringes 6 in den keilförmigen Zwischenraum zwischen der radial nach außen weisenden Druckfläche 38 des Dichtungsringes und der radial nach innen weisenden äußeren Begrenzungsfläche des Sitzes 26 und bewirkt so, dass der Dichtungsring 4 mit seiner Dichtungsfläche 8 gegen die zylindermantelförmige Außenfläche des Kolbens 18 gedrückt (also "nachgestellt") wird. So stellt sich die erfindungsgemäße Dichtung 6 nach Abrieb oder auch andersartigem Verschleiß erfindungsgemäß also selbsttätig nach.

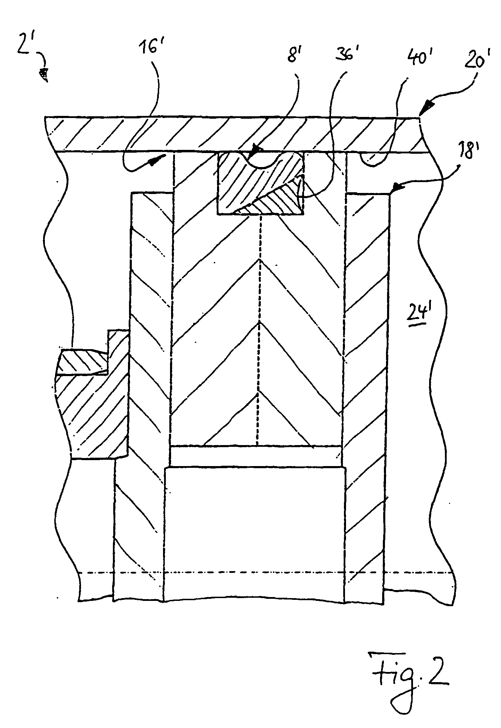

Die Dichtung 2' gemäß Figur 2 unterscheidet sich von der Dichtung 2 gemäß Figur 1 prinzipiell insbesondere dadurch, dass sie in einem inneren Bauteil 18' (hier einem Kolben 18') montiert ist. Dementsprechend weist ihre Dichtungsfläche 8' radial nach außen und liegt dort gegen eine radial nach innen weisende äußere Fläche 40' eines Dichtungsspaltes 16' an. Die Fläche 40', gegen die die Dichtungsfläche 8' der Dichtung 2' anliegt, ist die radial nach innen weisende Kreiszylindermantelfläche eines Zylinders 20', in dem sich der Kolben 18' hin- und herbewegt.

Ein weiterer wesentlicher prinzipieller Unterschied der Dichtung 2' gemäß Figur 2 verglichen mit der Dichtung 2 gemäß Figur 1 besteht darin, dass die konkave Vorspannfläche 36' in Richtung der Druckseite des Kolbens (in Figur 2 nach rechts) weist, wo ein Fluid 24' unter Druck steht. Die Vorspannwirkung des Fluides 24' setzt also nicht erst dann ein, wenn (wie bei der in Figur 1 abgebildeten Dichtung) das Fluid 24 unter der Dichtungsfläche 8 begonnen hat, hindurchzutreten, sondern der Druck des Fluides 24' wirkt auf die Vorspannfläche jederzeit.

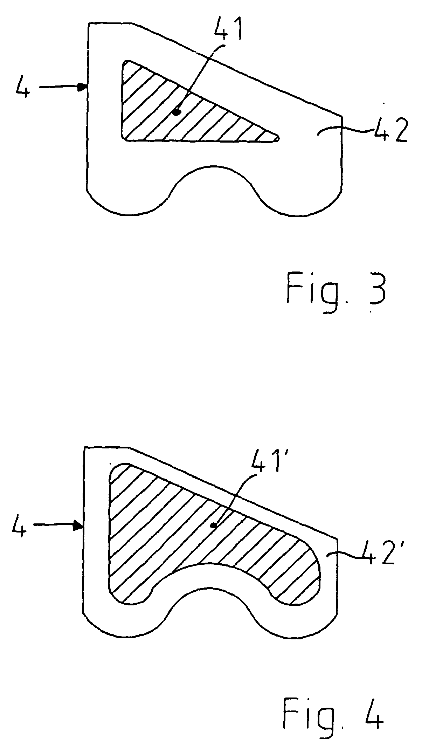

Die beschriebene Dichtung kann auch einen formstabilen Kern aufweisen, der bevorzugt aus einem Kunststoffmaterial hergestellt ist. Eine erste Ausgestaltung einer solchen Dichtung mit einem formstabilen Kern ist in Figur 3 gezeigt. Dabei weist der formstabile Kern 41 die keilförmige Form eines Druckringes auf und ist innerhalb des Dichtungsringes 42 angeordnet. In einer weiteren Ausgestaltung, die in Figur 4 gezeigt ist, kann der formstabile Kern 41' auch die Form des Dichtungsringes 4 aufweisen und mit einem Dichtungsmaterial 42' beschichtet sein, wobei die Beschichtung 42' vorzugsweise 2 bis 3 mm dick ist. Durch diese Ausgestaltungen wird dem Problem eines zu starken Abriebes der Dichtung im Betrieb begegnet. Dieses ergibt sich daraus, dass die Dichtung insgesamt relativ leicht verformbar ist und dadurch bei der Translationsbewegung der Kolbenstange 18 mitgenommen wird und zwischen die Kolbenstange 18 und das Kolbengehäuse 20 gerät, wodurch die Dichtung dann schlicht zerrieben werden kann. Dies wird bei einer formstabilen Dichtung vermieden.

## Patentansprüche

1. Dichtung, zur Anordnung zwischen einer radial nach innen weisenden äußeren Begrenzungsfläche eines ringförmigen Dichtungsspaltes und einer radial nach außen weisenden inneren Begrenzungsfläche des Dichtungsspaltes mit einem Dichtungsring (4) mit einer Dichtungsfläche (8), die gegen eine der Begrenzungsflächen (14) des Dichtungsspaltes (16) dicht anliegt, sowie mit einer Druckfläche (38), die auf der der Dichtungsfläche (8) radial gegenüberliegenden Seite des Dichtungsringes (4) mit der anderen (40) der Begrenzungsflächen des Dichtungsspaltes (16) einen im Querschnitt keilförmigen Zwischenraum bildet, und einem Druckring (6), der von einem Vorspannmittel (24) mindestens zeitweise in den Zwischenraum gegen die andere (40) der Begrenzungsflächen des Dichtungsspaltes (16) und die Druckfläche (38) vorgespannt ist zum Andrücken der Dichtungsfläche (8) gegen die eine Begrenzungsfläche (14) des Dichtungsspaltes (16),
wobei der Druckring (6)
- eine äußere Wirkfläche (40) in Gestalt einer radial nach außen gerichteten Kreiszylindermantelfläche aufweist, die gegen die andere (40) der Begrenzungsflächen des Dichtungsspaltes (16) vorgespannt ist, und
- eine innere Wirkfläche (38) in Gestalt einer radial nach innen gerichteten Kreiskegelmantelfläche aufweist, die gegen die als komplementäre Kreiskegelmantelfläche ausgebildete Druckfläche (38) des Dichtungsringes (4) vorgespannt ist, sowie
- eine Vorspannfläche (36) in Gestalt einer axial gerichteten Ringfläche aufweist, gegen die das Vorspannmittel (24) vorgespannt ist,
**dadurch gekennzeichnet, dass** die Dichtungsfläche (8) des Dichtungsringes zwei radial vorspringende Dichtungslippen (10) aufweist, die zwischen sich eine Nut (12) in dem Dichtungsring (4) einfassen.

2. Dichtung nach Anspruch 1,
**dadurch gekennzeichnet, dass** das Vorspannmittel (24) ein Fluid ist, das auf einer Seite der Dichtung (2) unter Druck steht und gegen den Druckring (6) anliegt.

3. Dichtung nach Anspruch 1 oder 2,
**dadurch gekennzeichnet, dass** die Vorspannfläche (36) konkav ist.

4. Dichtung nach einem der vorhergehenden Ansprüche,
**dadurch gekennzeichnet, dass** der Querschnitt durch die Dichtungslippen (10) und die Nut (12) jeweils kreisbogenförmig ist.

5. Dichtung nach einem der vorhergehenden Ansprüche,
**dadurch gekennzeichnet, dass** der Querschnitt durch die Dichtungslippen (10) und die Nut (12) eine stetige Wellenlinie ist.

6. Dichtung nach einem der vorhergehenden Ansprüche,
**dadurch gekennzeichnet, dass** die eine (14) der Begrenzungsflächen des Dichtungsspaltes (16) die Mantelfläche eines kreiszylindrischen inneren Bauteiles (18) ist und die andere (40) der Begrenzungsflächen des Dichtungsspaltes (16) die radial nach innen weisende Fläche einer kreiszylindrischen Bohrung (16) eines äußeren Bauteils (20).

7. Dichtung nach Anspruch 6,
**dadurch gekennzeichnet, dass** das innere Bauteil (18) sich oszillierend durch die Bohrung (16) bewegt

8. Dichtung nach Anspruch 7,
**dadurch gekennzeichnet, dass** auf einer Seite der Dichtung (2) als Vorspannmittel (24) ein Fluid unter Druck steht und dass auf der anderen Seite der Dichtung (2) in einer Wandung der Bohrung (16), die mit Spielpassung an die Mantelfläche (14) des inneren Bauteiles (18) anliegt, eine ringförmige Fluidspeichemut (32) ausgebildet ist.

9. Dichtung nach einem der vorhergehenden Ansprüche,
**dadurch gekennzeichnet, dass** die Dichtung, insbesondere der Dichtungsring (4), einen formstabilen Kern, insbesondere aus einem Kunststoffmaterial, aufweist

10. Dichtung nach Anspruch 9,
**dadurch gekennzeichnet, dass** der formstabile Kern im Wesentlichen die Form des Druckrings (6) oder Dichtungsrings (4) aufweist und mit einem Dichtungsmaterial beschichtet ist.

11. Kolbenvorrichtung mit einem in einem Zylinder verfahrbaren Kolben zur Förderung einer Flüssigkeit und mit einer zwischen Innenwandung des Zylinders und Außenwandung des Kolbens angeordneten Dichtung nach einem der vorhergehenden Ansprüche.

12. Meerwasserentsalzungsanlage mit einer Kolbenvorrichtung nach Anspruch 11 zur Förderung von Meerwasser und/oder konzentriertem Salzwasser.

## Claims

1. Seal, for arrangement between a radially inwardly facing outer boundary surface of a ring-shaped sealing gap and a radially outwardly facing inner boundary surface of the sealing gap, comprising a sealing ring 4 having a sealing surface (8) which rests tightly against one of the boundary surfaces (14) of the sealing gap (16) and having a pressure surface (38) which forms with the other (40) of the boundary surfaces of the sealing gap (16) an intermediate space of wedge-shaped cross-section on the side of the sealing ring (4) lying radially opposite the sealing surface (8), and comprising a pressure ring (6) which at least at times is biased by a biasing means (24) into the intermediate space against the other (40) of the boundary surfaces of the sealing gap (16) and against the pressure surface (38) in order to press the sealing surface (8) against the one boundary surface (14) of the sealing gap (16),
wherein the pressure ring (6) has
- an outer operative surface (40) in the shape of a radially outwardly oriented lateral surface of a circular cylinder which is biased against the other (40) of the boundary surfaces of the sealing gap (16), and
- an inner operative surface (38) in the shape of a radially inwardly oriented lateral surface of a circular cone which is biased against the pressure surface (38) of the sealing ring (4), which pressure surface (38) is in the form of a lateral surface of a complementary circular cone, and
- a biasing surface (36) in the shape of an axially oriented annular surface against which the biasing means is biased,
**characterised in that** the sealing surface (8) of the sealing ring has two radially projecting sealing lips (10) which enclose between them a groove (12) in the sealing ring (4).

2. Seal according to claim 1,
**characterised in that** the biasing means (24) is a fluid which on one side of the seal (2) is under pressure and lies against the sealing ring (6).

3. Seal according to claim 1 or 2,
**characterised in that** the biasing surface (36) is concave.

4. Seal according to any one of the preceding claims,
**characterised in that** the cross-section through the sealing lips (10) and the groove (12) is in each case in the shape of a circular arc.

5. Seal according to any one of the preceding claims,
**characterised in that** the cross-section through the sealing lips (10) and the groove (12) is a steady wavy line.

6. Seal according to any one of the preceding claims,
**characterised in that** one (14) of the boundary surfaces of the sealing gap (16) is the lateral surface of a circular-cylindrical inner component (18) and the other (40) of the boundary surfaces of the sealing gap (16) is the radially inwardly facing surface of a circular-cylindrical bore (16) of an outer component (20).

7. Seal according to claim 6,
**characterised in that** the inner component (18) moves in oscillating manner through the bore (16).

8. Seal according to claim 7,
**characterised in that**, on one side of the seal (2), a fluid is under pressure as the biasing means (24) and, on the other side of the seal (2), an annular fluid storage groove (32) is formed in a wall of the bore (16) which rests in a clearance fit on the lateral surface (14) of the inner component (18).

9. Seal according to any one of the preceding claims,
**characterised in that** the seal, especially the sealing ring (4), has a dimensionally stable core, especially made of a plastics material.

10. Seal according to claim 9,
**characterised in that** the dimensionally stable core substantially has the shape of the pressure ring (6) or the sealing ring (4) and is coated with a sealing material.

11. Piston device having a cylinder which is displaceable in a piston to convey a fluid and having a seal according to any one of the preceding claims arranged between the inside wall of the cylinder and the outside wall of the piston.

12. Sea water desalination plant having a piston device according to claim 11 for conveying sea water and/or concentrated salt water.

## Revendications

1. Joint à disposer entre une surface périphérique externe d'une fente de joint de forme circulaire dirigée radialement vers l'intérieur et une surface périphérique interne de la fente de joint dirigée radialement vers l'extérieur avec un joint annulaire (4) avec une surface d'étanchéité (8) placée de manière étanche contre l'une des surfaces périphériques (14) de la fente de joint (16), ainsi qu'avec une surface de serrage (38) qui, sur le côté du joint annulaire (4) opposé radialement à la surface d'étanchéité (8), forme avec une autre (40) des surfaces périphériques de la fente de joint (16) un intervalle en forme de coin dans la section transversale, et un joint annulaire (6) précontraint, au moins temporairement dans l'intervalle par un moyen de précontrainte (24), contre une autre (40) des surfaces périphériques de la fente de joint (16) et la surface de serrage (38)pour presser la surface d'étanchéité (8) contre l'une des surfaces périphériques (14) de la fente de joint (16), sachant que le joint annulaire (6) comporte
- une surface active externe (40) se présentant sous la forme d'une surface cylindrique circulaire d'enveloppe dirigée radialement vers l'extérieur, qui est précontrainte contre une autre (40) des surfaces périphériques de la fente de joint (16), et
- une surface active interne (38) se présentant sous la forme d'une surface cylindrique circulaire d'enveloppe dirigée radialement vers l'intérieur, qui est précontrainte contre la surface de serrage (38) configurée comme surface cylindrique circulaire d'enveloppe complémentaire du joint annulaire (4), ainsi qu'une
- surface de précontrainte (36) se présentant sous la forme d'une surface annulaire dirigée axialement, contre laquelle le moyen de précontrainte (24) est précontraint,
**caractérisé en ce que** la surface d'étanchéité (8) du joint annulaire comporte deux lèvres d'étanchéité saillantes radialement (10) qui, entre elles, entourent une rainure (12) dans le joint annulaire (4).

2. Joint selon la revendication 1, **caractérisé en ce que** le moyen de précontrainte (24) est un fluide qui est sous pression sur un côté du joint (2) et est placé contre l'anneau de serrage (6).

3. Joint selon la revendication 1 ou 2, **caractérisé en ce que** la surface de précontrainte (36) est concave.

4. Joint selon l'une des revendications précédentes, **caractérisé en ce que** la section transversale à travers les lèvres d'étanchéité (10) et la rainure (12) a chaque fois la forme d'un arc de cercle.

5. Joint selon l'une des revendications précédentes, **caractérisé en ce que** la section transversale à travers les lèvres d'étanchéité (10) et la rainure (12) est une ligne ondulée continue.

6. Joint selon l'une des revendications précédentes, **caractérisé en ce que** l'une (14) des surfaces périphériques de la fente de joint (16) est la surface d'enveloppe d'un composant interne cylindrique circulaire (18) et l'autre (40) surface périphérique de la fente de joint (16) est la surface dirigée radialement vers l'intérieur d'un alésage cylindrique circulaire (16) d'un composant externe (20).

7. Joint selon la revendication 6, **caractérisé en ce que** le composant interne (18) se déplace en oscillant à travers l'alésage (16).

8. Joint selon la revendication 7, **caractérisé en ce que** sur un côté du joint (2) un fluide est sous pression comme moyen de précontrainte (24) et **en ce que** sur l'autre côté du joint (2) est configurée une rainure de stockage du fluide (32) dans une paroi de l'alésage (16) placé avec ajustement mobile sur la surface d'enveloppe (14) du composant interne (18).

9. Joint selon l'une des revendications précédentes, **caractérisé en ce que** le joint, en particulier le joint annulaire (4) présente un noyau indéformable, en particulier en matière plastique.

10. Joint selon la revendication 9, **caractérisé en ce que** le noyau indéformable se présente essentiellement sous la forme de l'anneau de serrage (6) ou du joint annulaire (4) et est revêtu d'un matériau d'étanchéité.

11. Dispositif à piston avec un piston déplaçable dans un cylindre pour le transport d'un liquide et avec un joint disposé entre la paroi interne du cylindre et la paroi externe du piston selon l'une de revendications précédentes.

12. Installation de dessalement d'eau de mer avec un dispositif à piston selon la revendication 11 pour le transport de l'eau de mer et/ou de l'eau salée concentrée.
